# EUROPEAN PATENT SPECIFICATION

(11) **EP 1 627 564 B1**
(45) Date of publication and mention of the grant of the patent: **08.04.2009**
(21) Application number: 05076779.7
(22) Date of filing: 01.08.2005
(51) Int. Cl.: A01L 7/04

(54) **Attachment for a horseshoe**
Zusatzvorrichtung für ein Hufeisen
Accessoir pour un fer à cheval

(30) Priority: 18.08.2004 NL 1026866
(43) Date of publication of application: 22.02.2006
(73) Proprietor: Tuijtel, Cornelis, 2952 AL Alblasserdam (NL); Bakker, Marcus Huig, 2975 BK Ottoland (NL)
(72) Inventor: Tuijtel, Cornelis, 2952 AL Alblasserdam (NL); Bakker, Marcus Huig, 2975 BK Ottoland (NL)
(74) Representative: Kupecz, Arpad

(56) References cited:
- FR-A- 689 598
- GB-A- 148 303
- US-A- 1 454 999
- US-A- 1 552 840

## Description

The present invention relates to an attachment for a horseshoe according to the preamble of claim 1.

Such attachments for improving the grip of the hooves of a riding animal, in particular a horse, are known. Such grip-improving attachments are necessary in particular when riding on a slippery surface, such as grass that may be or not may be wet, concrete and ice. US 1 552 840 or US 1,454,999 describe an attachment that as connecting part possesses a central hub, whose ends are threaded. The threads at the two ends of the central hub have opposite pitches. Both ends of the central hub are provided with basic components, which basis components can be placed at an adjustable distance from one another with the aid of the central hub. In order to prevent the attachment becoming detached, each basic component comprises two basic component segments, with each leg of the horseshoe being clamped between the two basic component segments of a basic component by means of screwing. Each basic component also comprises a peg, which peg improves the grip for the riding animal.

A problem of the known attachments is that they are relatively heavy. Moreover, fastening is difficult and time consuming, because two pairs of screws are needed to fasten the two basic components to the horseshoe. The screw heads are necessarily located at the side facing away from the hoof, that is to say, in practice they are directed towards the surface on which the riding animal walks. This means that these screws may become damaged, with all its consequences.

It is the object of the present invention to provide an attachment of the above-mentioned kind that can be fastened and detached easily, while there is the guarantee that the attachment cannot become loose whereby the animal would no longer have an improved grip. Loosening could result in mal no longer enjoying an improved footing. Loosening could cause injury to the animal and/or its rider.

The invention solves this problem by providing an attachment for a horseshoe as it is characterized in claim 1.

According to the invention the attachment is designed to be braced against the inner rim of the horseshoe against its two leg portions, the attachment comprises at least two basic components, each basic component comprising a flat plate portion and the plate portions, fastened to the horseshoe, each face towards the underside of a respective leg portion of the horseshoe, and the basic component comprises a raised edge, which raised edge is provided with at least one tapering element, which tapering elements can be moved up against the inner side of the horseshoe by increasing the distance between the basic components, with the tapering elements being embodied such that they are able to penetrate into the horseshoe and in this manner brace the attachment against both leg portions.

It has been shown that an attachment braced in this manner against both leg portions, can be fastened very securely to the horseshoe. This reduces the risk of a riding or pack animal, such as a horse, loosing its footing. The attachment according to the invention is very light. Although it is thinkable that the connecting part is, or can be provided with a calk, it is preferred that at least one flat plate portion on its side facing away from the horseshoe is, or can be provided with a calk.

The connecting part for varying the distance between the basic components is a connecting part that is rotatable in relation to the basic components, wherein a first basic component is provided with either a male or a complementary female element, and the rotatable connecting part at the respective end is provided with the other element, in that the male and female elements are provided with thread, and in that the connecting part is rotatably connected with a second basic component.

In the case of, for example,
- the rotatable connecting piece having a polygonal shape so that it can be engaged with a pair of pliers or open-end spanner or
- having a hole into which a rod-like tool can be inserted, the distance between the first and the second basic component can thus be varied in a simple manner.

An attractive embodiment is characterized, in that the second basic component is provided either with a second male element or a second complementary female element, which second male and female elements are provided with threads whose pitch is counter to that of the male and the female element, and that the other second element is provided at the end of the rotatable connecting part, where it is connected with the second basic component.

In this way, the distance between the two basic components can be adapted more quickly with one single rotation.

According to a preferred embodiment, the connecting piece is reduced near its midpoint.

The reduction helps to avoid that the frog of the horse's hoof can touch the connecting piece.

According to an important embodiment, the points are tapered and so sharp and hard that they are able to penetrate the material of the horseshoe.

This avoids the necessity for complementary openings in the horseshoe for the accommodation of the points, and affords a greater degree of freedom when placing the attachment.

The present invention will now be elucidated by way of the drawing, in which
Fig. 1 shows a bottom view of an attachment according to the invention;
Fig. 2 shows a top view of the attachment illustrated in Fig. 1; and
Fig. 3 shows a front view of a variant of the attachment illustrated in Fig. 1.

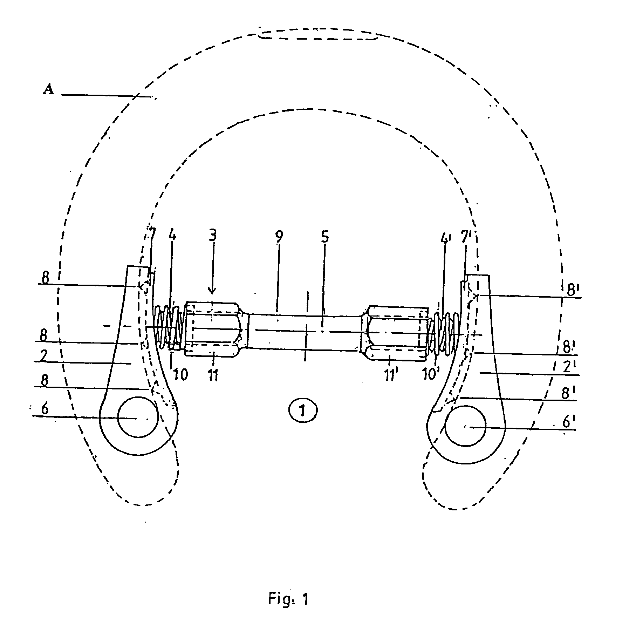

The attachment 1 illustrated in Fig. 1 comprises two basic components 2, 2', each of which is formed from a plate. During use of the attachment, a respective end of a leg portion of a horseshoe A (indicated with broken lines) rests on each plate. The basic components 2, 2' are connected via means 3, which make it possible to vary the distance between the basic components 2, 2'. In the embodiment illustrated in Fig. 1, the means 3 are formed by the two threaded male elements 4, 4' (forming in this embodiment part of the basic components 2, 2') and an elongate hexagonal body 5 equipped with the male elements 4, 4', which male elements 4, 4' can be screwed into complementary female elements (indicated with a dot-dash line) at the two ends 11, 11' of the elongate body 5. The pitches of the two male elements 4, 4' run counter to one another. By turning the elongate body 5, it is thus possible to vary the distance between the basic components 2, 2'.

In the illustrated embodiment, the attachment 1 is provided with two calks 6, 6', which in effect ensure that the horse's footing on the surface is improved. The calks 6, 6' may be detachable calks, in which case the basic components 2, 2' may, for example, be provided with thread (not shown) to allow the calks 6, 6' to be screwed into the basic components 2, 2'. Alternatively, the calks 6, 6' may in accordance with the illustrated embodiment also form an integral part of the attachment 1, in particular of the basic components 2, 2'.

The plates of the basic components 2, 2' are provided with a raised edge 7, 7' (Fig. 1). Each of these is provided with hard-steel points 8, 8'. These are sufficiently sharp and hard to be able to penetrate into the iron of the horseshoe. This ensures that the basic components 2, 2' engage the respective leg portions of the horseshoe A without the attachments 1 being able to move out of place. If the horseshoe A is provided with complementary openings for the points 8, 8', the hardness of the points is of minor important. However, this solution is considered to be less attractive.

To fit the attachment 1, the basic components 2, 2' are braced against the respective leg portions of the horseshoe. By turning the hexagonal body 5 in relation to the basic components 2, 2', the distance between the two basic components 2, 2' is caused to increase and the points 8, 8' penetrate the inner rim of the respective leg portions of the horseshoe. Thanks to the use of thread, a very considerable force can be exerted with little effort. The penetration of the points 8, 8' into the iron of the horseshoe A, makes it substantially impossible for the attachment to move non-coaxially in relation to the connecting piece. This ensures that notwithstanding the very considerable forces exerted on the hooves while riding the horse, the attachment will not come loose.

Since the components 2, 2', 5 are able to turn in relation to each other, means 10 are provided for producing a slight amount of friction, so that the influence of gravity will no longer cause the components 2, 2', 5 to turn in relation to one another. This facilitates fitting the attachment to the horseshoe A. The means 10 are springs 10, 10'. These also provide some protection for the threads of the male elements 4, 4'.

To remove the attachment, the hexagonal body 5 is rotated in the opposite direction, which brings the basic components 2, 2' closer together again.

When a body 5 having a hexagonal cross section is used, it can simply be tightened or loosened with an open-end spanner. The body 5 is preferably provided with a reduced portion 9, which makes it lighter as well as affording room for the frog of the hoof when the horse is standing on the respective hoof.

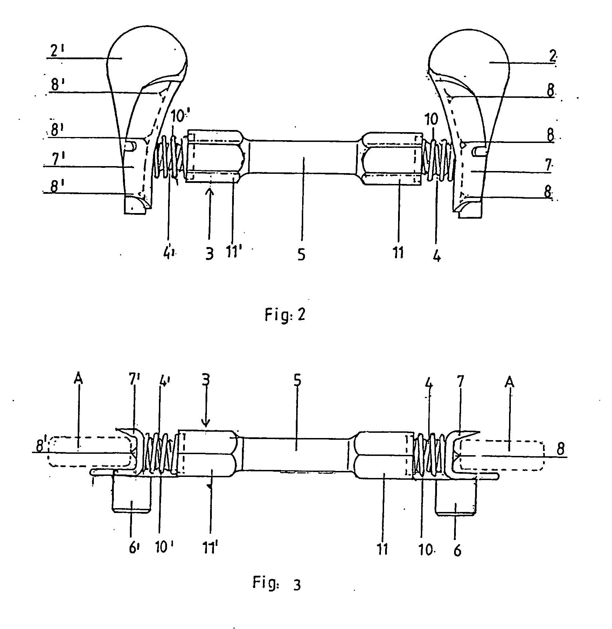

In Fig. 2 a top view of the above-described attachment 1 is shown. In the embodiment shown, raised edges 7, 7' are provided that preferably have a narrow and thin edge portion, which at the side of the hoof projects over the horseshoe A.

Instead of a polygonal, e.g. hexagonal body 5, it is also possible to use a body that is not polygonal such as a cylindrical body 5, in which case the cylindrical body 5 is perpendicular to its longitudinal direction provided with a hole (not shown). By means of a pin that can be inserted into the hole, the distance between the basic components 2, 2' can be varied in the same manner as with a hexagonal body 5. This is not preferred, because the hole will quickly become clogged with dirt.

The means 3 are preferably placed such that when fitted to the horseshoe of a horse, they are positioned under the concave part in the hoof such that they do not come into contact with the horse and unnecessary discomfort is avoided.

The present invention is elucidated by way of a preferred embodiment of the attachment according to the invention. It goes without saying that other embodiments are possible, without departing from the scope of the appended claims. For example, the basic components 2, 2' may engage holes in the horseshoe. Also, the attachment may engage additional positions on the horseshoe, such as the front inner side of the horseshoe. If the inner rim of the horseshoe is provided with notches or cavities, they may also be used to enable the attachment to engage the horseshoe.

The term connecting part refers to a portion of the attachment that can at least be functionally connected with the basic components. That is to say, it is conceivable that one or both basic components together with the connecting part form a unit composed of separate elements. According to the invention it suffices if the basic components and the connecting piece rotatably engage one another. Thus it suffices that either of the elements chosen from basic component and connecting piece functions as stop for the other element. In principle, it is possible to vary the length of the connecting piece. To this end, the connecting piece has to consist of (at least) two components that can be rotatably connected with one another via thread. Since in such a case the two components have to be rotated in relation to each other, two tools will be needed to implement this, which makes fitting more awkward and therefore does not merit preference.

## Claims

1. An attachment for a horseshoe, which horseshoe possesses two leg portions, and the attachment possesses basic components (2, 2') that via a connecting part (5) are connected with each other at an adjustable distance, and the attachment is provided with a calk (6, 6') or is designed for a calk to be fitted, wherein said attachment is designed to be braced against the inner rim of the horseshoe against its two leg portions, the attachment comprises at least two basic components (2, 2'), each basic component (2, 2') comprising a flat plate portion and the plate portions, fastened to the horseshoe, each face towards the underside of a respective leg portion of the horseshoe, and the basic component comprises a raised edge (7, 7'), which raised edge is provided with at least one tapering element (8, 8'), which tapering elements can be moved up against the inner side of the horseshoe by increasing the distance between the basic components, with the tapering elements being embodied such that they are able to penetrate into the horseshoe and in this manner brace the attachment against both leg portions, the connecting part (5) for varying the distance between the basic component (2, 2') is a connecting part that is rotatable in relation to the basic components (2, 2'), wherein a first basic component is provided with either a male (4, 4') or a complementary female element, and the rotatable connecting part (5) at the respective end (11, 11') is provided with the other element, in that the male (4, 4') and female elements are provided with thread, and in that the connecting part (5) is rotatably connected with a second basic component, **characterised in that** springs (10, 10') are provided around said male (4, 4') and female elements.

2. An attachment according to claim 1, **characterised in that** the second basic component is provided either with a second male element or a second complementary female element, which second male and female elements are provided with threads whose pitch is counter to that of the male and the female element, and that the other second element is provided at the end of the rotatable connecting part, where it is connected with the second basic component.

3. An attachment according to claim 1 or 2, **characterised in that** the connecting piece (5) is reduced near its midpoint.

4. An attachment according to one of the preceding claims 1-3, **characterised in that** the points are tapered and so sharp and hard that they are able to penetrate into the material of the horseshoe.

## Patentansprüche

1. Anbauteil für ein Hufeisen, wobei das Hufeisen zwei Beinabschnitte aufweist, und wobei das Anbauteil Grundkomponenten (2,2') aufweist, welche über ein Verbindungsteil (5) miteinander in einem einstellbaren Abstand verbunden sind, und wobei das Anbauteil mit einer Verstemmung (6,6') versehen ist oder so ausgebildet ist, dass eine Verstemmung an demselben anbringbar ist, wobei das Anbauteil dafür vorgesehen ist, gegen den inneren Rand des Hufeisens gegen seine zwei Beinabschnitte verspannt zu werden, wobei das Anbauteil wenigstens zwei Grundkomponenten (2,2') aufweist, wobei jede Grundkomponente (2,2') einen flachen Plattenabschnitt aufweist und die Plattenabschnitte in ihrem an dem Hufeisen angebrachten Zustand jeweils in Richtung der Unterseite eines entsprechenden Beinabschnitts des Hufeisens gerichtet sind, und wobei die Grundkomponente einen erhabenen Rand (7,7') aufweist, wobei der erhabene Rand mit wenigstens einem sich verjüngenden bzw. spitz zulaufenden Element (8,8') versehen ist, wobei die sich verjüngenden Elemente gegen die innere Seite des Hufeisens durch Vergrößern des Abstands zwischen den Grundkomponenten bewegt werden kann, wobei die sich verjüngenden Elemente derart ausgebildet sind, dass sie in der Lage sind, in das Hufeisen einzudringen und auf diese Art und Weise das Anbauteil gegen beide Beinabschnitte verspannen, wobei das Verbindungsteil (5) zum Verändern des Abstands zwischen den Grundkomponenten (2,2') ein Verbindungsteil ist, welches bezüglich der Grundkomponenten (2,2') drehbar ist, wobei eine erste Grundkomponente entweder mit einem männlichen (4,4') oder einem komplementären weiblichen Element versehen ist, und wobei das drehbare Verbindungsteil (5) an dem entsprechenden Ende (11,11') mit dem anderen Element versehen ist, wobei die männlichen (4,4') und die weiblichen Elemente mit Gewinden versehen sind, und wobei das Verbindungsteil (5) drehbar mit einer zweiten Grundkomponente verbunden ist,
**dadurch gekennzeichnet, dass** um die männlichen (4,4') und weiblichen Elemente herum Federn (10,10') angeordnet sind.

2. Anbauteil nach Anspruch 1,
**dadurch gekennzeichnet, dass** die zweite Grundkomponente entweder mit einem zweiten männlichen Element oder einem zweiten komplementären weiblichen Element versehen ist, wobei die zweiten männlichen und weiblichen Elemente mit Gewinden versehen sind, deren Gewindegänge entgegengesetzt zu denjenigen des männlichen und des weiblichen Elements sind, und dass das andere zweite Element an dem Ende des drehbaren Verbindungsteils vorgesehen ist, wo es mit der zweiten Grundkomponente verbunden ist.

3. Anbauteil nach Anspruch 1 oder 2,
**dadurch gekennzeichnet, dass** das Verbindungsteil (5) im Bereich seines Mittelpunkts reduziert ist.

4. Anbauteil nach einem der vorhergehenden Ansprüche 1 bis 3,
**dadurch gekennzeichnet, dass** die Spitzen verjüngt und so scharf und hart sind, dass sie in der Lage sind, in das Material des Hufeisens einzudringen.

## Revendications

1. Accessoire pour un fer à cheval, lequel fer à cheval comporte deux branches, et l'accessoire comporte des constituants de base (2, 2') qui sont reliés par une partie de liaison (5) l'un à l'autre à une distance réglable, et l'accessoire est pourvu d'un crampon (6, 6') ou est conçu pour le montage d'un crampon, dans lequel ledit accessoire est conçu pour être entretoisé contre le bord intérieur du fer à cheval contre ses deux branches, accessoire comportant au moins deux constituants de base (2, 2'), chaque constituant de base (2, 2') comportant une partie de plaque plate et les parties de plaque, fixées au fer à cheval, étant tournées chacune vers le côté inférieur d'une branche respective du fer à cheval, et le constituant de base comportant un bord surélevé (7, 7'), lequel bord surélevé est pourvu d'au moins un élément effilé (8, 8'), lesquels éléments effilés peuvent être élevés contre le côté intérieur du fer à cheval en augmentant la distance entre les constituants de base, les éléments effilés (8, 8') étant réalisés de façon qu'ils soient capables de pénétrer dans le fer à cheval, et, de cette manière, d'entretoiser l'accessoire contre les deux branches, la partie de liaison (5) destinée à faire varier la distance entre les constituants de base (2, 2') étant une partie de liaison qui peut tourner par rapport aux constituants de base (2, 2') dans lequel un premier constituant de base est pourvu soit d'un élément mâle (4, 4') soit d'un élément femelle complémentaire, et la partie de liaison (5) pouvant tourner à l'extrémité respective étant pourvue de l'autre élément, en ce que les éléments mâle (4, 4') et femelle sont pourvus d'un filetage, et en ce que la partie de liaison (5) est reliée de façon à pouvoir tourner à un second constituant de base, **caractérisé en ce que** des ressorts (10, 10') sont placés autour desdits éléments mâle (4, 4') et femelle.

2. Accessoire selon la revendication 1, **caractérisé en ce que** le second constituant de base est pourvu soit d'un second élément mâle soit d'un second élément femelle complémentaire, lesquels seconds éléments mâle et femelle sont pourvus de filetage dont le pas est opposé à celui de l'élément mâle et de l'élément femelle, et **en ce que** l'autre second élément est prévu à l'extrémité de la partie de liaison tournante où il est relié au second constituant de base.

3. Accessoire selon la revendication 1 ou 2, **caractérisé en ce que** la pièce de liaison (5) est réduite vers son milieu.

4. Accessoire selon l'une des revendications précédentes 1 à 3, **caractérisé en ce que** les pointes sont effilées et si pointues et dures qu'elles sont capables de pénétrer dans la matière du fer à cheval.
